Europäisches Patentamt

(19) European Patent Office

Office européen des brevets

(11) Publication number: **0 367 625 B1**

(12) **EUROPEAN PATENT SPECIFICATION**

(45) Date of publication of patent specification :
26.06.91 Bulletin 91/26

(21) Application number : 89311422.3

(22) Date of filing : 03.11.89

(51) Int. Cl.⁵: **B60J 5/14, E06B 3/48, E05D 1/02**

---

(54) **Improvements in and relating to shutter laths.**

---

The file contains technical information
submitted after the application was filed and
not included in this specification

(30) Priority : **04.11.88 GB 8825843**

(43) Date of publication of application :
**09.05.90 Bulletin 90/19**

(45) Publication of the grant of the patent :
**26.06.91 Bulletin 91/26**

(84) Designated Contracting States :
**BE DE ES FR GB IT NL**

(56) References cited :
**EP-A- 0 123 508**
**US-A- 2 804 137**
**US-A- 3 302 690**
**US-A- 3 967 671**

(73) Proprietor : **YORK TRAILER COMPANY
LIMITED
Yafforth Road
Northallerton North Yorkshire, DL7 8UE (GB)**

(72) Inventor : **Endelin, Claude
42 Ter Route de Macon
F-71450 Blanzy (FR)**

(74) Representative : **Allen, Oliver John Richard et
al
Lloyd Wise, Tregear & Co. Norman House
105-109 Strand
London, WC2R 0AE (GB)**

---

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to roller shutters employed in vehicles, such as vans, trailers, semi-trailers and lorries, and containers for the transport of goods, as closures for access openings to the load-carrying space of the vehicles or containers.

The access opening to the load-carrying space of vehicles or containers is generally provided at one end thereof, but in some arrangements it may be at the side. Access openings may be covered by a pair of side hinged doors or alternatively a roller shutter may be employed. Known rollers shutters comprise a plurality of elongate laths joined together along their long edges by hinges to form a rectangular door. The ends of the laths are movable within channels arranged to allow the shutter to be lifted up and around into a position generally parallel to the roof of the load carrying space to uncover the access opening or to be lowered into a vertical position to close the access opening.

Known laths are formed from rectangular metal sections which have rollers, normally in the form of ball bearings attached to either end which move within metal channels secured along the sides of the opening and along part of the roof of the load carrying space. The laths are connected at their ends by hinges. The hinges are simple metallic hinges attached across adjacent pairs of laths on the interior side of the shutter. The hinges therefore intrude into the load space of the vehicle or container. When the vehicle or container is what is generally referred to as a refrigerated vehicle or container, that is, it or to be used to carry frozen or perishable goods or other goods whose temperature has to be controlled, so that the load-carrying space has to be insulated, the laths often have a layer of foamed material bonded to them to reduce the amount of heat transferred across them. The laths are further provided with relatively narrow rubber strips along their long ends which cover any gaps between them when they are vertical. However as the shutter is pulled round corners they move apart and the strips are not wide enough to cover the gaps thus produced.

Despite the provision of the layers of foamed material and rubber edge strips for the laths, it has been found that a large amount of heat transfers across known shutters, in particular via the rails and sliders, the hinges and the laths themselves. Furthermore the rubber strips have been found to be relatively ineffective as seals especially since they tend to twist out of position as the shutter is lowered and do not cover the gaps between adjacent laths.

A high density foam material has to be used for at least part of the insulative layer to allow it to withstand impact without damage. High density foam is expensive and its insulative properties are not a good as low density foam. If low density foam is employed, as has been suggested, a skin has to be bonded to its exposed surface to protect it which adds to the weight and expense of the shutter.

European Patent Application EP-A-0123508 describes a thermally insulated roller shutter door comprising a plurality of laths each of which comprises an aluminium channel section with an elongate C cross-section. A laminate of a high density foam layer and a low density foam layer is attached to the channel section by way of the low density layer which is secured within the channel section.

US-A-3967671 describes a door comprising a plurality of rectangular elongate sections which are hinged together at their longitudinal edges, each section being formed of foamed material. The sections are reinforced at the hinge locations by attaching a layer of strengthening material, preferably a metal, to the longitudinal edges of the sections. If the sections are formed of low-density foam plastic then the faces are provided with skins of dense material such as resin reinforced fiberglass. If they are formed of structural foam plastic no separate skins need be provided.

A vehicle or container in accordance with the invention has a shutter for closing the access opening to its load carrying space, the shutter being formed from a plurality of elongate laths joined together along their long edges and is characterised in that each lath comprises an elongate hollow section formed from a fibre reinforced plastics material and two members for closing the ends of the section and in that the laths may be employed with the cavity formed by closing the ends of the sections, with the members, empty or with foamed material filled thereinto.

The lath is lighter and cheaper to produce than metallic laths. It is particularly suitable for use in a shutter for a refrigerated vehicle or container since plastics materials are insulative and the amount of heat transferred via the laths is therefore small.

Preferably the section has a generally rectangular cross-section so that, with its ends closed, a generally rectangular hollow box is produced. The lath is therefore strong and has good torsional resistance. A preferred form for the section is that of a rectangle but with the corners at either end of one long side replaced by connecting members angled to the long side. The advantage of this design is that it aids movement of the shutter formed from such laths along a curved path.

Preferably the lath is filled with foamed insulating material. This may be inserted in the form of a solid block or, with the ends of the section closed, it may be injected into the box so formed. A problem with known laths was to ensure good bonding between them and the layer of foamed material employed to try and insulate them. This is obviated by providing a hollow lath since insulative material is supported within the lath and does not need to be bonded thereto.

The lath protects the insulate material and so low density foamed material can be employed without risk of damage. This not only has much better insulative properties than high density foamed material but also is cheaper.

Suitably the end members are also formed from a plastic material which may be fibre reinforced. The end members may be provided with means, preferably apertures, for mounting sliders thereto.

The shutter is suitably formed by connecting together the laths in an edge to edge relationship with hinge members which extend the length of the laths, each lath being provided along two opposed longitudinal edges with means for securing a hinge member thereto.

A preferred embodiment of the hinge member comprises two attachment portions, one of which co-operates with the securing means along one longitudinal edge of a lath and the other of which co-operates with the securing means along the opposed longitudinal edge of a second lath. The two attachment portions are spaced from and connected to each other by a pair of connecting members which are themselves spaced apart. The attachment portions and connecting members may be integral and the hinge member is preferably formed from rubber or another sufficiently flexible plastics material. The hinge members are provided between the opposed edges of adjacent pairs of laths rather than across their faces. They therefore do not intrude into the load space. Further, the hinge members can be readily sterilised which makes the shutter particularly suitable for use in a vehicle for carrying foodstuffs. The hinge member also acts as a seal between two laths and prevents heat loss between them due to the insulative nature of the material from which it is formed and the gap between the connecting members. Suitably one connecting portion is concertined. This portion can the expand as required as the shutter moves along a curved path.

A rail, formed preferably from a plastics material, may be provided along each edge of the access opening, the upper ends of the rails extending around and into the load-carrying space parallel to the roof thereof. The rails have apertures therein along which the sliders on the laths move to raise or lower the shutter. The section of the rails which bends round may be formed in a curve or, more preferably since the moulding of a curved section is expensive, the section is formed from several straight lengths connected at an angle to each other to provide the required bend, the contacting ends of the lengths being mitred. To ensure that the sliders move smoothly around the section and particular across the joins between the lengths, they are preferably kidney-shaped. The pivot point of the sliders then moves along a curved path even across the angled corners in the rails. The sliders are also formed of plastics material and heat losses across the rails and sliders is therefore minimised.

The invention will now be further described by way of example with reference to the accompanying drawings in which ;-

Figure 1 is a vertical section through part of one embodiment of a shutter suitable for use in a refrigerated vehicle or container in accordance with with invention.

Figure 2 is a sectional view of part of one of the laths of the shutter of Figure 1 taken along the line II-II ;

Figure 3 is a rear view of part of a refrigerated vehicle or container in accordance with the invention showing a second embodiment of a shutter suitable for use therewith ;

Figure 4 is a partly sectional view of the vehicle or container of Figure 3 taken along line IV-IV ;

Figure 5 is an enlarged sectional view of a section of the vehicle or container of Figure 3 taken along line V-V of Figure 4 ;

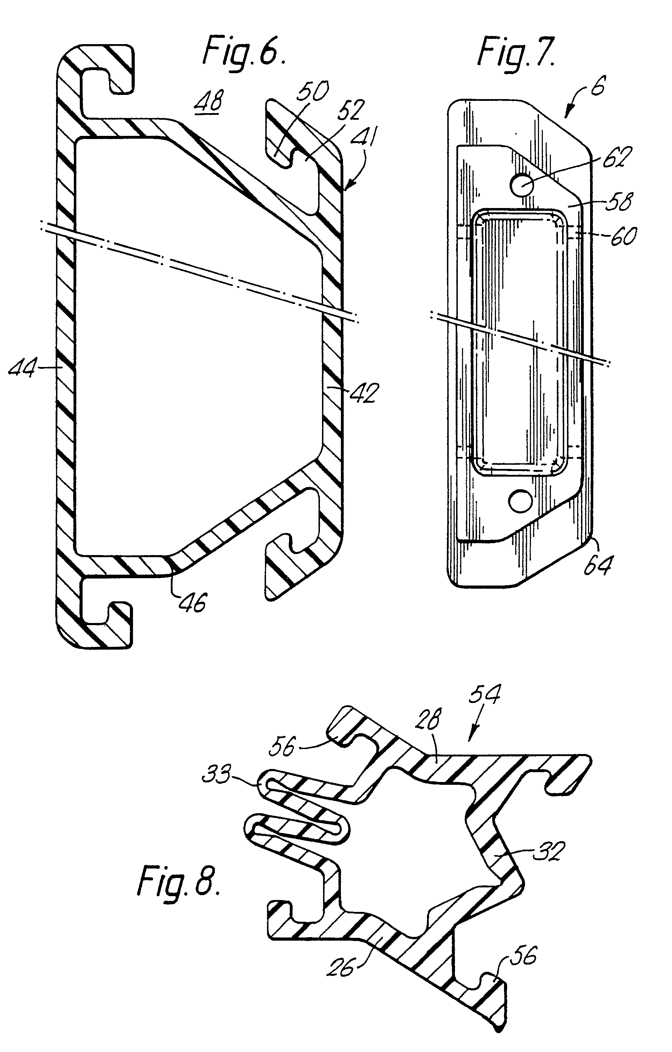

Figure 6 is a vertical section through a lath of the shutter of Figure 3 ;

Figure 7 is a side view of an end member of the shutter of Figure 3 and

Figure 8 is a vertical section through a hinge member of the shutter of Figure 3.

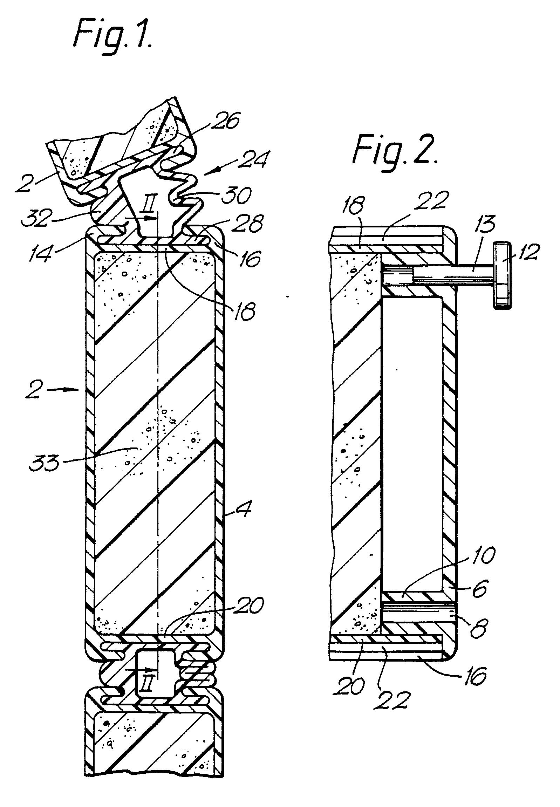

The laths 2 shown in Figures 1 and 2 comprise a rectangular hollow section 4, the opposite open ends of which are closed by end members 6 to form a hollow box section. The rectangular section 4 is preferably formed by pultrusion of a fibre reinforced plastics material, for example, glass fibre reinforced polyester. The end members 6 are preferably mouldings of a plastics materials which may also be fibre reinforced.

The end members 6 are shaped to locate in and lock with the open ends of the hollow rectangular section 4. The end members each have two apertures 8 one adjacent each extremity of the end member. Integral tubular members 10 extend from the apertures 8. Two sliders, only one of which 12 is shown can therefore be supported on each end member, a pivot 13 connected to the slider 12 locating in the tubular members 10.

Along each longitudinal edge of the rectangular section 4, the side walls 14 and 16 extend beyond the end walls, 18 and 20 for a short distance and curve back towards each other parallel to the end walls to form a T-shaped groove 22 at either end of the lath. These grooves 22 allow a plurality of laths 2 to be connected together in a lengthwise edge to edge relationship to form a shutter by means of hinge members 24.

The hinge members 24 which are formed of rubber or other flexible material each comprise two flat attachment portions 26, 28 which are dimensioned to fit within the T-shaped groove 24 of a rectangular section 4 and are connected and spaced by two arms 30, 32. One arm 30 is concertined while the other arm 32 includes an integral nose. To form a shutter two hinge members 24 are attached to a rectangular section 4, one at each longitudinal edge thereof, by sliding one attachment portion of each hinge member into each T-shaped groove. The end members 6 are then fitted into the open ends of the rectangular section 4 which closes the T-shaped grooves and locks the hinge members 24 to the lath so formed.

As shown in Figure 1, when a plurality of laths are interconnected, the hinge members should all be orientated in the same way, that is, with all the concertied arms 30 on one side of the shutter so formed. This side will face outwardly of the vehicle with which the shutter is to be used.

When the laths 2 are to be employed in a shutter for a refrigerated vehicle or container, the interior 33 of the lath is filled with a foam material, for example, polyurethane to insulate the lath. Since the lath is in the form of a box, the foam can be simply injected into the lath. Alternatively, a suitably dimensioned block of formed material can be inserted into the cavity of a rectangular section 4 which is then locked in place by insertion of end members 6 into each open end of the section 4 to form a lath 2. A shutter formed from such laths prevents, to a large extent, heat transfer into or out of the vehicle across the laths since the laths themselves are insulated and the hinge members 24 act as seals.

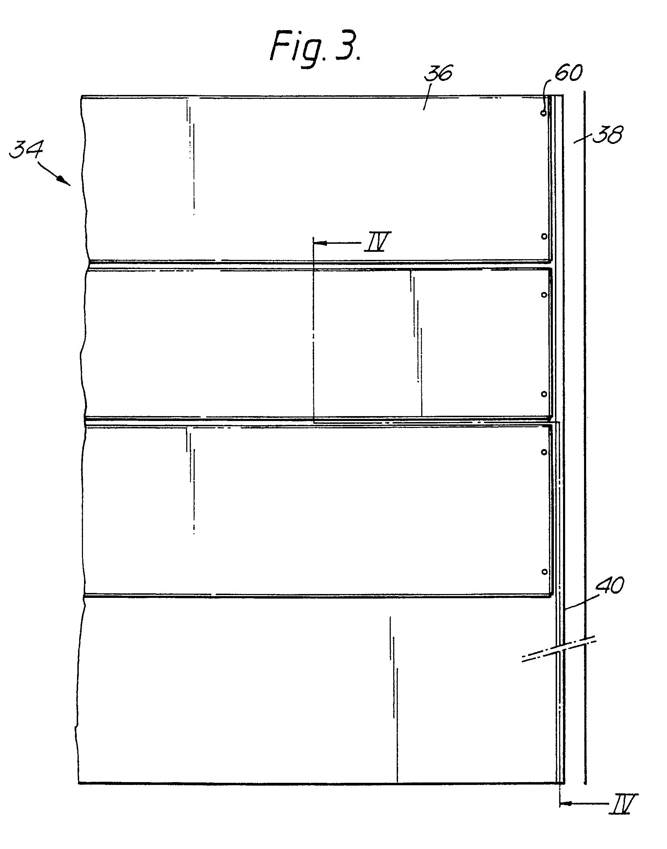

Figure 3 shows an end view of a shutter 34 formed from a plurality of interconnected laths 36. The laths 36 are similar to the laths 2 shown in Figures 1 and 2, like parts will therefore be identified by the same reference numerals and only the differences will be described in detail below.

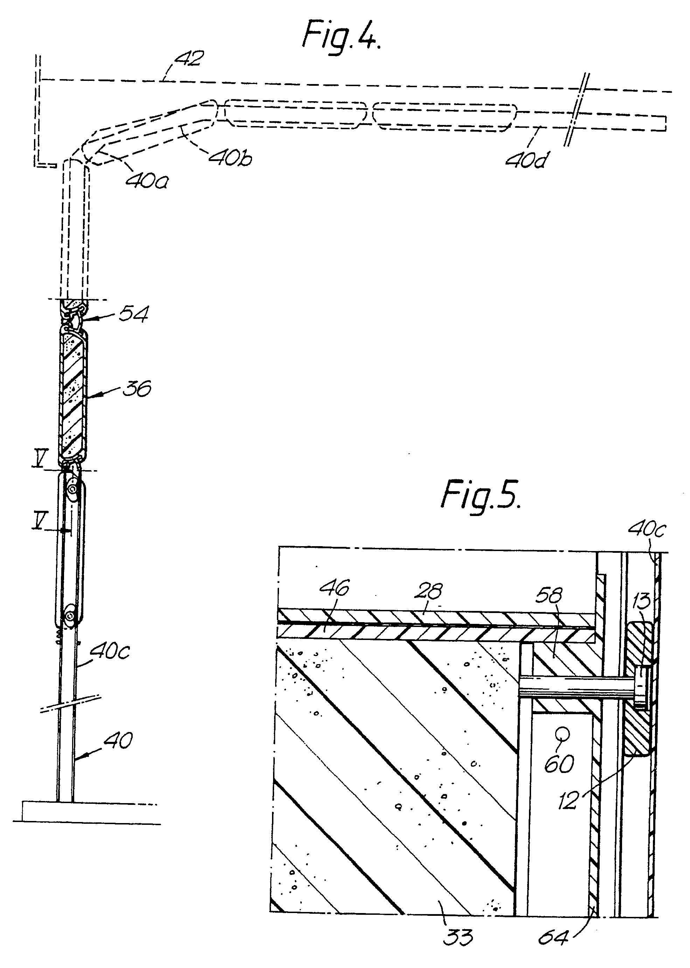

The shutter 34 is mounted at the rear end of a vehicle or container, the end 38 of one side wall of which can be seen in seen in Figure 3. The sliders 12 of the laths 36 of the shutter 34 more in guide rails 40 mounted to the side walls of the vehicle or container. The guide rails 40 are in the form of a square C and are formed from pultruded glass fibre reinforced polyester. They extend up each side of the access opening end and then bend round and extend into the load-carrying space of the vehicle or container parallel to the roof thereof to which they are connected, as can be seen from figure 4, which is a section taken along line IV-IV of Figure 3 with the remainder of the shutter 34 and part of the roof 42 of the vehicle or container shown in dotted outline.

The upper sections of the rails 40 are also shown in dotted outline to Figure 4. The rails 40 may each comprise a single section with a curve in the region where the rails bend round from the vertical to the horizontal. However, it is preferred to from this region from a number of straight sections 40a, 40b connected at an angle to each other and to a vertical section 40c and a horizontal section 40d. The abutting ends of all the sections are mitred to allow them to be interconnected by, for example, adhesive. The advantage of this is that the need for a curved section, which is expensive, is obviated, all that is required is straight sections which must be cut to all the required lengths and mitred at their ends to give the correct angles between the lengths.

To allow the shutter 34 to move smoothly in the rails 40, and particularly across the angled joins between the sections 40 a to d, the sliders 12 are preferably kidney-shaped. All the sliders 12 are arranged so that the double contact side is on the side of the rails 40 facing the interior of the vehicle or container. As the sliders 12 move along the rails 40 around the bent region, their pivot points follow a curved path due to their shape which means that the shutter 34 can be raised or lowered smoothly.

The sliders 12 are formed from a high density plastics material, preferably polyvinyl chloride. This makes them strong, resistant to wear and insulative. Their pivots are also formed from an insulative plastics material. The sliders 12 are a also formed from insulative material. Accordingly the heat which can transfer across the sliders 12 and rails 40 is minimised.

The main difference between the laths 2 and the laths 36 is that the hollow section 41 of the laths 34, whilst generally rectangular in cross section, has one side wall 42 shorter than the other 44, the end walls 46 comprising two sections, a first at right angles to side wall 44 and a second, at an angle to the first which connects the first section to sidewall 42. The side walls 42, 44, as in lath 2, extend beyond the end walls 46 and then turn towards each other, parallel to the end walls to form an angled T groove 48. The end portions 50 of the extensions are turned back parallel to the main section of the side walls 42, 44 to define a pair of transverse grooves 52. The attachment portions of 26, 28 the hinge member 54 for laths 34 are correspondingly shaped (see Figure 8), that is, they are angled and include transverse extensions 56 at the ends. The hinge member 54 is attached to a hollow section 41 by sliding one of its attachment portions 26 or 28 into the angled groove 48, the transverse extensions 56 locating in the transverse grooves 52 which holds the two parts together and prevents the attachment portions 26, 28 of the hinge member 54 from being pulled out of the groove 48 in the hollow section 41 under tension.

With the hinge members 54 slotted in place at either end of a hollow section 41, the section is closed by fitting in place end members 6 in the open ends of the section 41. The end members 6 comprise a main body 58 dimensioned to fit closely inside the hollow section 41. The main body 58 and the hollow section 41 are provided with aligned apertures 60 whereby they may be secured together with screws or rivets. The main body also includes a further two apertures 62 for receiving the slider pivots 13. The body 58 is mounted to, or formed integrally with a backing plate 64 of the same shape as the overall outline of the hollow sections 41. This serves to close the grooves 48 at either end of the hollow section 41.

As can be seen in Figure 4, the laths 36 and hinges 54 are connected together with the long side wall 44 of the hollow sections 41 and the concertined arm 30 of the hinge members 54 on the same side of the shutter 34, namely the exterior side thereof, which will be in tension as the shutter moves around the bent region of the rails 40. Movement around that region will therefore cause the outer edges of adjacent laths to move apart whilst the inner edges will move together. The concertined arms 32 of the hinge members will extend to accommodate the movement of the outer edges while the noses on the other arms 30 will prevent the inner edges from hitting each other. If laths of the type shown in Figure 1 and 2 are employed they pivot on their inner edges and arms 32 would have to be relatively long to accommodate the movement of the outer edges. By mitring off the corners, the pivot point if moved back away from the inner edge and the concertined arm 32 can made shorter, thus saving material and expense.

Preferably a strip of rubber is secured to the front and back faces of each lath on either edge thereof so that when the shutter is in place, each rail is positioned between two rubber strips and no gaps exists between the shutters and rails.

A shutter formed from either type of lath described above is light, easy to clean and prevents heat transfer there across since the laths are formed from non-conductive material so that heat loss across them is minimised.

The arrangement has been found to be comparable in performance to double side - hinged doors in terms of heat losses. Previous roller shutters were much less efficient than double doors at preventing heat loss.

The hollow nature of the laths means that low density foamed insulative material can be used since it will be protected from damage. The foam is held in place by the end members which can readily be removed to allow replacement of the foam or of a damaged seal.

## Claims

1. A vehicle or container having a shutter for closing the access opening to its load-carrying space, the shutter being formed from a plurality of elongate laths joined together along their long edges, characterised in that each lath (2, 36) comprises an elongate hollow section (4, 41) formed from a fibre reinforced plastics material and two members (6) for closing the ends of the section and in that the laths (2, 36) may be employed with the cavity (33), formed by closing the ends of the sections (4, 44) with the members (6), empty or with foamed material filled thereinto.

2. A vehicle or container as claimed in claim 1 wherein the hollow section (4, 41) has a generally rectangular cross-section.

3. A vehicle or container as claimed in claim 2 wherein one of the major sides (42) of the hollow section (41) is shorter than the other (4 4), the shorter side (42) being connected to the minor sides (46) by angled members.

4. A vehicle or container as claimed in any preceding claim wherein the laths (2, 36) are connected together by hinge members (24, 54) which extend the length of the laths (2, 36), each lath (2, 36) being provided along two opposed longtitudinal edges thereof with means for securing a hinge member (24, 54) thereto.

5. A vehicle or container as claimed in claim 4 wherein each hinge member (24, 54) comprises two attachment portions (26, 28), one of which co-operates with the securing means along the opposed longitudinal edge of a second lath (2, 36).

6. A vehicle or container as claimed in claim 5 wherein the attachment portions (26, 28) of each hinge member (24, 54) are connected and spaced by two connecting members (30, 32) which are themselves spaced apart, one connecting member being concertined (30), the hinge members (24, 54) being formed from a flexible material.

7. A vehicle or container as claimed in any preceding claim wherein a rail (40) is secured along each edge of the access opening, the upper ends (40a, b, d) of the rails (40) extending around and into the load-carrying space parallel to the roof thereof, the laths (2, 36) each having at least one slider (12) mounted at each end thereof, the sliders (12) being movable within apertures provided in the rails (40) to thereby raise or lower the shutter.

8. A vehicle or container as claimed in claim 7 wherein each rail (40) is formed from a number of straight sections (40a, b, c, d) connected at an angle to each other, the abutting ends being mitred.

9. A vehicle or container as claimed in either claim 7 or 8 wherein the sliders (12) are kidney shaped.

10. A vehicle or container as claimed in any one of claims 7 to 9 wherein the sliders (12) and/or the rails (40) are/or the end members (6) are formed from a plastics material.

## Ansprüche

1. Fahrzeug oder Behälter mit einem Rolladen zum Schliessen der Zugangsöffnung zu seinem die Ladung tragenden Raum, wobei der Rolladen von einer Vielzahl von langen Latten, die an ihren langen Kanten miteinander verbunden sind, gebildet ist, dadurch gekennzeichnet, dass jede Latte (2, 36) einen langen hohlen Abschnitt (4, 41) umfasst, der aus einem faserverstärktem Kunststoffmaterial hergestellt ist und zwei Elemente (6) zum Schliessen der Enden des Abschnittes, und dass die Latten (2, 36) mit dem Hohlraum (33), der durch Schliessen der Enden der Abschnitte (4, 44) mit den Elementen (6) gebildet wird, im Leerzustand oder mit dort hineingefülltem geschäumtem Material verwendet werden können.

2. Fahrzeug oder Behälter nach Anspruch 1, worin der hohle Abschnitt (4, 41) einen im allgemeinen rechteckigen Querschnitt hat.

3. Fahrzeug oder Behälter nach Anspruch 2, worin eine der Hauptseiten (42) des hohlen Abschnittes (41) kürzer als die andere (44) ist, wobei die kürzere Seite mit den Nebenseiten (46) durch umgebogene Elemente verbunden ist.

4. Fahrzeug oder Behälter nach einem der vorhergehenden Ansprüche, worin die Latten (2, 36) durch Scharnierelemente (24, 54) miteinander verbunden sind, welche die Länge der Latten (2, 36) verlängern, wobei jede Latte (2, 36) längs zwei gegenüberliegenden längs verlaufenden Kanten mit einer Vorrichtung zum Befestigen eines Scharnierelementes (24, 54) daran vorgesehen sind.

5. Fahrzeug oder Behälter nach Anspruch 4, worin jedes Scharnierelement (24, 54) zwei Anbringungsteile (26, 28) umfasst, von denen eines mit der Befestigungsvorrichtung längs der gegenüberliegenden längs verlaufenden Kante einer zweiten Latte (2, 36) zusammenwirkt.

6. Fahrzeug oder Behälter nach Anspruch 5, worin die Anbringungsteile (26, 28) jedes Scharnierelementes (24, 54) von zwei Verbindungselementen (30, 32) verbunden und getrennt werden, die selbst voneinander getrennt sind, wobei ein Verbindungselement ziehharmonikaförmig zusammengefaltet (30) ist, wobei die Scharnierelemente (24, 54) aus einem flexiblen Material gebildet sind.

7. Fahrzeug oder Behälter nach einem der vorhergehenden Ansprüche, worin eine Schiene (40) längs jeder Kante der Zugangsöffnung befestigt ist, wobei die oberen Enden (40a, b, d) der Schienen (40) sich um und in den die Ladung tragenden Raum parallel zu dessem Dach erstrecken, wobei die Latten (2, 36) je wenigstens einen Schieber (12), der an jedem Ende davon angebracht ist, haben, wobei die Schieber (12) innerhalb Öffnungen, die in den Schienen (40) vorgesehen sind, bewegbar sind, um dadurch den Rolladen zu heben oder zu senken.

8. Fahrzeug oder Behälter nach Anspruch 7, worin jede Schiene (40) von einer Anzahl von geraden Abschnitten (40a, b, c, d) gebildet wird, die in einem Winkel stehend miteinander verbunden sind, wobei die angrenzenden Enden auf Gehrung verbunden sind.

9. Fahrzeug oder Behälter nach entweder Anspruch 7 oder 8, worin die Schieber (12) nierenförmig sind.

10. Fahrzeug oder Behälter nach einem der Ansprüche 7 bis 9, worin die Schieber (12) und/oder die Schienen (40) und/oder die Endelemente (6) aus einem Kunststoffmaterial gebildet sind.

## Revendications

1. Véhicule ou conteneur comportant un volet de fermeture de l'ouverture donnant accès à l'espace de chargement, le volet se composant d'une multiplicité de lattes allongées jointes ensemble le long de leurs bords longitudinaux, caractérisé en ce que chaque latte (2, 36) comprend une section creuse allongée (4, 41) fabriquée dans une matière plastique renforcée par fibres et deux éléments obturateurs (6) des extrémités de cette section et en ce que les lattes (2, 36) peuvent être utilisées avec la cavité (33), formée par l'obturation des extrémités des sections (4, 44) au moyen des éléments (6), étant laissée vide ou remplie d'un matériau expansé.

2. Véhicule ou conteneur selon la revendication 1, où la section creuse (4, 41) présente une coupe généralement rectangulaire.

3. Véhicule ou conteneur selon la revendication 2, où un des principaux côtés (42) de la section creuse (41) est plus court que l'autre (44), le côté plus court (42) étant relié aux côtés secondaires (46) par des éléments angulaires.

4. Véhicule ou conteneur selon une des revendications précédentes, où les lattes (2, 36) sont reliées ensemble par des éléments-charnières (24, 54) se prolongeant sur toute la longueur des lattes (2, 36), chaque latte (2, 36) étant munie le long de ses deux rebords longitudinaux opposés de moyens de fixation d'un élément-charnière (24, 54) sur celle-ci.

5. Véhicule ou conteneur selon la revendication 4, où chaque élément-charnière (24, 54) comprend deux attaches (26, 28), dont une s'emboîte dans le moyen de fixation le long du rebord longitudinal opposé d'une seconde latte (2, 36).

6. Véhicule ou conteneur selon la revendication 5, où les attaches (26, 28) de chaque élément-charnière (24, 54) sont reliées et espacées par deux membres intermédiaires (30, 32) qui sont eux-mêmes espacés l'un de l'autre, un membre intermédiaire étant plié en accordéon (30), les éléments-charnières (24, 54) étant formés dans un matériau flexible.

7. Véhicule ou conteneur selon toute revendication précédente, où un rail (40) est fixé le long de chaque rebord de l'ouverture d'accès, les extrémités supérieures (40a, b, d) des rails (40) se prolongeant autour et dans l'espace de chargement selon un axe parallèle au toit de celui-ci, les lattes (2, 36) présentant chacune au moins une coulisse (12) montée à chaque extrémité de celle-ci, les coulisses (12) étant mobiles dans des gorges pratiquées dans les rails (40) de sorte à ainsi lever ou abaisser le volet.

8. Véhicule ou conteneur selon la revendication 7, où chaque rail (40) est formé à partir d'un certain nombre de sections droites (40a, b, c, d) reliées de manière angulaire entre elles, les extrémités bout-à-bout étant jointes en onglet.

9. Véhicule ou conteneur selon la revendication 7 ou la revendication 8, où les coulisses (12) sont réniformes.

10. Véhicule ou conteneur selon l'une des revendications 7 à 9, où les coulisses (12) et/ou les rails (40) et/ou les éléments d'extrémité (6) sont formés dans une matière plastique.

**Fig.1.**

**Fig.2.**

# Fig. 3.

## Fig.4.

42

40a 40b 40d

54

36

V

V

40c

40

## Fig.5.

40c

46 28 58 13

60

12

33 64

Fig.6.

Fig.7.

Fig.8.